# FASCICULE DE BREVET EUROPEEN

(11) **EP 2 406 466 B1**
(45) Date de publication et mention de la délivrance du brevet: **07.11.2012**
(21) Numéro de dépôt: 10715282.9
(22) Date de dépôt: 01.03.2010
(51) Int. Cl.: F01D 25/24, F01D 9/04, F01D 11/08

(54) **ENSEMBLE D'ANNEAU DE TURBINE**
TURBINENRINGANORDNUNG
TURBINE RING ASSEMBLY

(30) Priorité: 09.03.2009 FR 0951445; 09.03.2009 FR 0951446
(43) Date de publication de la demande: 18.01.2012
(73) Titulaire: Snecma, 75015 Paris (FR); Snecma Propulsion Solide, 33187 Le Haillan Cedex (FR)
(72) Inventeur: DENECE, Franck, Roger, Denis, F-91240 Saint Michel Sur Orge (FR); GENDRAUD, Alain, Dominique, F-77670 Vernou La Celle Sur Seine (FR); HABAROU, Georges, F-33310 Le Bouscat (FR); ILLAND, Hubert, F-53960 Bonchamp (FR); BONNEAU, Damien, F-77000 Melun (FR)
(74) Mandataire: Joly, Jean-Jacques
(86) Numéro de dépôt international: PCT/FR2010/050342
(87) Numéro de publication internationale: WO 2010/103213

(56) Documents cités:
- EP-A1- 1 099 826
- EP-A1- 1 225 309
- FR-A1- 2 919 345
- GB-A- 2 445 075
- US-A- 4 596 116
- US-A1- 2004 062 639
- US-B2- 6 932 566

## Description

### Arrière-plan de l'invention

L'invention concerne un ensemble d'anneau de turbine pour une turbomachine, lequel ensemble comprend une pluralité de secteurs d'anneau en une seule pièce en matériau composite à matrice céramique et une structure de support d'anneau.

Le domaine d'application de l'invention est notamment celui des moteurs aéronautiques à turbine à gaz. L'invention est toutefois applicable à d'autres turbomachines, par exemple des turbines industrielles.

Les matériaux composites à matrice céramique, ou CMC, sont connus pour leurs bonnes propriétés mécaniques qui les rendent aptes à constituer des éléments de structure, et pour leur capacité à conserver ces propriétés à des températures élevées.

Dans des moteurs aéronautiques à turbine à gaz, l'amélioration du rendement et la réduction des émissions polluantes conduisent à rechercher un fonctionnement à des températures toujours plus élevées.

Aussi, l'utilisation de CMC pour différentes parties chaudes de tels moteurs a déjà été envisagée, d'autant que les CMC ont une masse volumique inférieure à celle de métaux réfractaires traditionnellement utilisés.

Ainsi, la réalisation de secteurs d'anneau de turbine en une seule pièce en CMC est-elle notamment décrite dans le document US 6 932 566. Les secteurs d'anneau sont à section méridienne en forme de K ou π avec une base annulaire dont la face interne définit la face interne de l'anneau de turbine et une face externe à partir de laquelle s'étendent deux parties formant pattes dont les extrémités sont engagées dans des logements en U d'une structure métallique de support d'anneau. Les pattes ont leurs extrémités engagées avec jeu radial dans les logements en U et sont maintenues en appui radial sur une surface des logements au moyen d'un organe élastique qui exerce sur le secteur d'anneau une force de rappel dirigée radialement vers l'axe de l'anneau.

L'engagement avec jeu des extrémités des pattes dans les logements permet une adaptation à une dilatation différentielle entre le CMC et le métal de la structure de support d'anneau mais le montage élastique présente plusieurs inconvénients.

Ainsi, un tel montage élastique n'est guère compatible avec un usinage de finition qui est habituellement réalisé après un montage initial des secteurs d'anneau pour conférer à la surface interne de l'anneau une forme cylindrique quasi parfaite.

En outre, lorsqu'un sommet d'aube d'une roue mobile entourée par l'anneau vient au contact d'un revêtement abradable présent sur sa face interne, le montage élastique induit un phénomène vibratoire indésirable.

De plus, l'étanchéité entre la veine d'écoulement gazeux du côté intérieur des secteurs d'anneau et le côté extérieur des secteurs d'anneau est affectée.

Un anneau de turbine ayant des pattes montées sans jeu radial dans une structure de support est montré dans le document EP 1099826, mais l'anneau est en matériau monocristallin.

### Objet et résumé de l'invention

L'invention vise à éviter les inconvenients mentionnés plus haut et propose à cet effet un ensemble d'anneau de turbine comprenant une pluralité de secteurs d'anneau en une seule pièce en matériau composite à matrice céramique et une structure de support d'anneau, chaque secteur d'anneau étant à section sensiblement en forme de π et ayant une première partie formant base annulaire avec une face interne définissant la face interne de l'anneau de turbine et une face externe à partir de laquelle s'étendent deux parties formant pattes dont les extrémités sont engagées dans des logements de la structure de support d'anneau, ensemble d'anneau de turbine dans lequel les extrémités des patte des secteurs d'anneau sont maintenues sans jeu radial par la structure de support d'anneau.

Ainsi, l'ensemble d'anneau de turbine est remarquable en ce que les secteurs d'anneau en CMC sont maintenus sans jeu radial par la structure de support d'anneau et ont une géométrie telle que le maintien est réalisé à un niveau relativement éloigné de la zone la plus chaude en fonctionnement.

Avantageusement, les pattes ont, en section méridienne, une longueur libre au moins égale à 3 fois leur largeur moyenne.

Avantageusement encore, les pattes ont en section méridienne une forme sensiblement en S.

Selon une particularité de l'ensemble d'anneau de turbine, l'une ou première des pattes a son extrémité maintenue radialement par engagement dans un logement à section sensiblement en U d'une partie en une seule pièce en forme de crochet de la structure de support d'anneau. Cette première patte est par exemple la patte amont. De préférence, le logement en U est délimité par des branches interne et externe opposées et la branche interne a une longueur inférieure à celle de la branche externe.

Selon une autre particularité de l'ensemble d'anneau de turbine, l'une ou seconde des pattes a son extrémité maintenue radialement sans jeu contre une surface annulaire de la structure de support d'anneau au moyen d'une pince rapportée. Cette seconde patte est par exemple la patte aval.

Selon encore une autre particularité de l'ensemble d'anneau de turbine, chaque secteur d'anneau est immobilisé axialement par engagement mutuel de reliefs complémentaires formés sur des surfaces d'appui en regard de la structure de support d'anneau. Un joint d'étanchéité peut être interposé entre les surfaces d'appui en regard. Le relief de maintien axial sur la surface d'appui d'une patte d'accrochage peut être sous forme d'une rainure coopérant avec une nervure formée sur la surface d'appui de la structure de support d'anneau, la rainure ayant avantageusement un profil sensiblement en forme de V.

### Brève description des dessins.

L'invention sera mieux comprise à la lecture faite ci-après, à titre indicatif mais non limitatif, en référence aux dessins annexés sur lesquels :
- la figure 1 est une vue en demi-coupe méridienne montrant un mode de réalisation d'un ensemble d'anneau de turbine selon l'invention ;
- les figures 2 à 4 montrent schématiquement le montage d'un secteur d'anneau dans la structure de support d'anneau de l'ensemble d'anneau de la figure 1 ;
- les figures 5A et 5B sont deux plans d'armure de tissage tridimensionnel montrant un mode de réalisation d'une ébauche fibreuse pour un secteur d'anneau en CMC de l'ensemble d'anneau de la figure 1 ;
- la figure 6 illustre une préforme fibreuse pour un secteur d'anneau en CMC de l'ensemble d'anneau de turbine de la figure 1 ;
- la figure 7 montre des étapes successives d'un mode de réalisation d'un secteur d'anneau de turbine en CMC ; et
- la figure 8 est une vue en coupe méridienne montrant une variante de réalisation d'un secteur d'anneau en CMC pour un ensemble d'anneau de turbine selon l'invention.

### Description détaillée de modes de réalisation

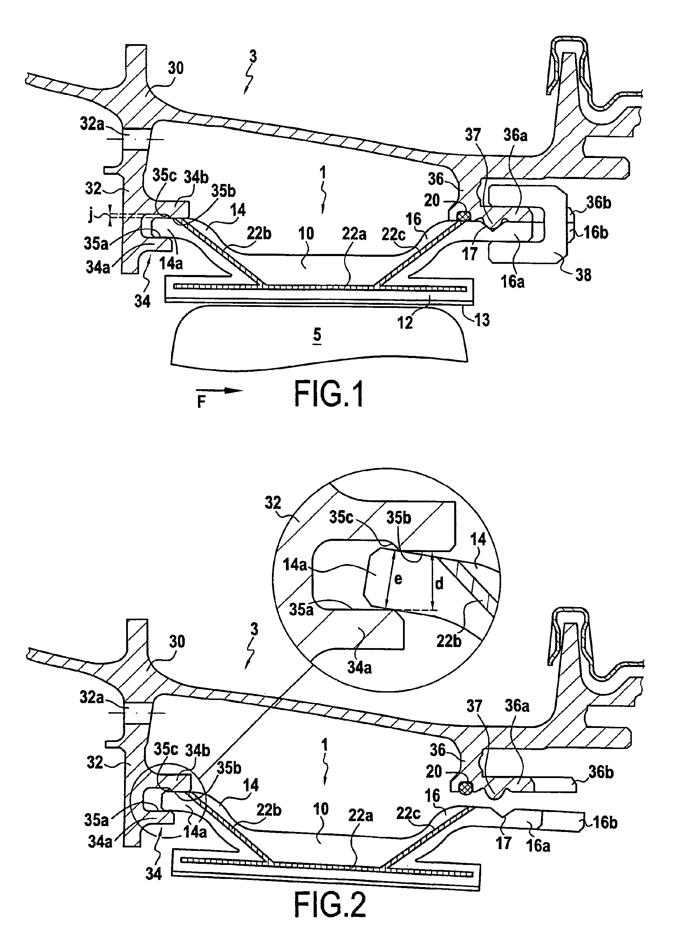

La figure 1 montre un ensemble d'anneau de turbine haute pression comprenant un anneau de turbine 1 en CMC et une structure métallique de support d'anneau 3. L'anneau de turbine 1 entoure un ensemble de pales rotatives 5. L'anneau de turbine 1 est formé d'une pluralité de secteurs d'anneau 10, la figure 1 étant une vue en coupe méridienne selon un plan passant entre deux secteurs d'anneau contigus.

Chaque secteur d'anneau 10 a une section sensiblement en forme de π avec une base annulaire 12 dont la face interne revêtue d'une couche 13 de matériau abradable définit la veine d'écoulement de flux gazeux dans la turbine. Des pattes 14, 16 à section méridienne sensiblement en forme de S s'étendent à partir de la face externe de la base annulaire 12 sur toute la longueur de celle-ci. L'une des pattes, ou patte amont 14 s'étend vers l'amont et sa partie d'extrémité amont 14a se situe en amont de l'extrémité amont de la base annulaire 12. L'autre patte 16, ou patte aval s'étend vers l'aval et sa partie d'extrémité aval 16a se situe en aval de l'extrémité aval de la base annulaire 12. Les termes "amont" et "aval" sont utilisés ici en référence au sens d'écoulement du flux gazeux dans la turbine (flèche F).

La structure de support d'anneau 3 qui est solidaire du carter de turbine 30 comprend une bride radiale amont annulaire 32 portant un crochet 34 de forme annulaire à section méridienne en forme de U ouvert en direction axiale vers l'aval. Le crochet 34 présente des branches opposées annulaires interne et externe 34a, 34b. La partie d'extrémité amont annulaire 14a de la patte 14 est engagée entre les faces intérieures 35a, 35b des branches 34a, 34b. La branche 34a du crochet 34 portant la face 35a est plus courte que la branche 34b portant la face 35b, la branche 35a se terminant donc en amont de l'extrémité de la branche 35b. La face 35a est à profil rectiligne tandis que la face 35b présente un décrochement 35c de sorte que la distance radiale d entre les faces 35a et 35b au voisinage de l'ouverture du crochet est légèrement inférieure à la distance radiale entre les faces 35a et 35b au voisinage du fond du crochet 34. La distance d est égale voire très légèrement inférieure à l'épaisseur e de la partie d'extrémité 14a de la patte 14, de sorte que la partie d'extrémité 14a de la patte 14 est engagée sans jeu voire avec une légère contrainte entre les surfaces 34a et 34b au voisinage de l'ouverture du crochet 34. Par contre, un léger jeu j est ménagé entre la partie d'extrémité 14a et la surface 34b au voisinage du fond du crochet 34. On note aussi qu'un chanfrein est formé à l'extrémité aval de la face 35a.

Le montage de la partie d'extrémité 14a de la patte 14 dans le crochet 34 permet ainsi d'assurer une étanchéité entre la veine d'écoulement de flux gazeux et l'extérieur des secteurs d'anneau, du côté amont de ceux-ci.

Du côté aval, la structure de support d'anneau comprend une bride annulaire 36 à section en L se terminant par une partie annulaire d'appui 36a contre laquelle s'appuie la partie d'extrémité annulaire 16a de la patte 16. La partie d'extrémité 16a de la patte 16 et la partie d'appui 36a de la bride 36 sont maintenues appliquées sans jeu l'une contre l'autre au moyen d'une pince 38 à section méridienne en U, de façon en soi connue. La pince est immobilisée circonférentiellement par rapport à la bride 36 et à la patte 16 en s'insérant entre des doigts 36b, 16b faisant saillie vers l'aval à partir de la partie 36a de la bride 36 et à partir de la partie d'extrémité 16a de la patte 16.

La partie d'appui 36a de la bride 36 présente une nervure circonférentielle 37 qui fait saillie vers l'intérieur et se loge dans une rainure 17 aménagée à la face annulaire extérieure de la partie d'extrémité 16a de la patte 16. La rainure 17 a de préférence une section sensiblement en forme de V tandis que la nervure a une section sensiblement en forme de U ou de V. Une immobilisation des secteurs d'anneau en direction axiale par rapport à la structure de support d'anneau est ainsi réalisée.

Afin d'assurer la meilleure étanchéité possible entre la veine d'écoulement de flux gazeux dans la turbine et l'extérieur de l'anneau de turbine du côté aval de celui-ci, un joint 20 est comprimé entre la partie d'appui 36a de la bride 36 et la partie d'extrémité 16a de la patte 16. Le joint 20 est par exemple constitué par une tresse métallique immobilisée dans un logement formé dans la face intérieure de la partie d'appui 36a en aval de la nervure 37.

En outre, l'étanchéité inter-secteurs est assurée par des languettes d'étanchéité logées dans des rainures se faisant face dans les bords en regard de deux secteurs d'anneau voisin. Une languette 22a s'étend sur presque toute la longueur de la base annulaire 12 dans la partie médiane de celle-ci. Une autre languette 22b s'étend le long de la patte 14. A une extrémité, la languette 22b vient en butée sur la languette 22a tandis qu'à l'autre extrémité la languette 22b vient au niveau de la face supérieure de la partie d'extrémité 14a de la patte 14 de préférence à un emplacement où celle-ci est engagée sans jeu dans le crochet 34. Une autre languette 22c s'étend le long de la patte 16. A une extrémité, la languette 22c vient en butée sur la languette 22a tandis qu'à l'autre extrémité la languette 22c vient au niveau de la face supérieure de la partie d'extrémité 16a de la patte 16 de préférence à l'emplacement du joint 20. Les languettes 22a, 22b, 22c sont par exemple métalliques et sont montées avec jeu à froid dans leurs logements afin d'assurer la fonction d'étanchéité aux températures rencontrées en service.

L'assemblage sans jeu des pattes 14, 16 du secteur d'anneau en CMC avec des parties métalliques de la structure de support d'anneau est rendu possible en dépit de la différence de coefficient de dilatation thermique du fait que :
- cet assemblage est réalisé à distance de la face chaude de la base annulaire 12 exposée au flux gazeux, et
- les pattes 14, 16 présentent avantageusement en section méridienne une longueur relativement grande par rapport à leur largeur moyenne de sorte qu'un découplage thermique efficace est obtenu entre la base annulaire 12 et les extrémités des pattes 14, 16, d'autant que le CMC présente une faible conductivité thermique.

En outre, de façon classique, des orifices de ventilation 32a formés dans la bride 32 permettent d'amener de l'air de refroidissement du côté extérieur de l'anneau de turbine 1.

De préférence, la longueur libre des pattes est égale à au moins 3 fois leur largeur moyenne. Par longueur libre, on entend ici la longueur du profil en section méridienne entre le raccordement à la base annulaire 12 et le contact avec la structure de support.

Les figures 2 à 4 illustrent des étapes successives de montage d'un secteur d'anneau. La différence de longueur axiale entre les branches 34a, 34b, la présence du jeu j au fond du crochet 34 et la présence d'un chanfrein à l'extrémité de la face 35a facilitent une bascule du secteur d'anneau pour passer la nervure 37 (figure 2), un faible angle de bascule de quelques degrés étant suffisant. On évite ainsi une trop forte sollicitation mécanique en flexion du secteur d'anneau en CMC.

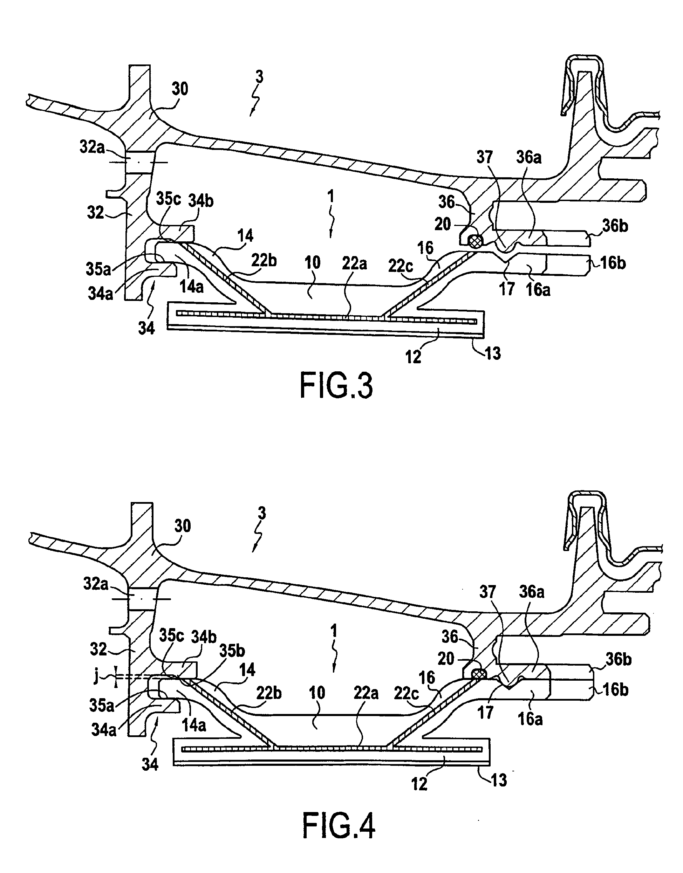

Lorsque la rainure 17 est au regard de la nervure 37, le secteur d'anneau peut être redressé (figure 3).

Lorsque la partie d'extrémité 14a de la patte 14 est amenée contre la partie d'appui 36a de la bride 36 (figure 4), la partie d'extrémité 14a de la patte 14 est appliquée fermement contre la face 35b de la branche 34b du crochet 34 au voisinage de l'ouverture de celui-ci, en s'appuyant sur la face opposée 35a. La partie d'extrémité 14a de la patte 14 est ainsi en contact étroit avec les faces 35a, 35b.

Les languettes d'étanchéité 22a, 22b, 22c peuvent être toutes montées avant l'amenée de l'ensemble des secteurs 10 dans le carter de turbine. En variante, les secteurs 10 peuvent être montés un à un dans le carter sans languettes et écartés de proche en proche circonférentiellement pour insérer les languettes.

Chaque secteur d'anneau 10 est réalisé en CMC par formation d'une préforme fibreuse ayant une forme voisine de celle du secteur d'anneau et densification du secteur d'anneau par une matrice céramique.

Pour la réalisation de la préforme fibreuse, on peut utiliser des fils en fibres céramique, par exemple des fils en fibres SiC tels que ceux commercialisés par la société japonaise Nippon Carbon sous la dénomination "Nicalon", ou des fils en fibres de carbone.

La préforme fibreuse est avantageusement réalisée par tissage tridimensionnel, ou tissage multicouches avec aménagement de zones de déliaison permettant d'écarter les parties de préforme correspondant aux pattes 14, 16 de la partie de préforme correspondant à la base 12.

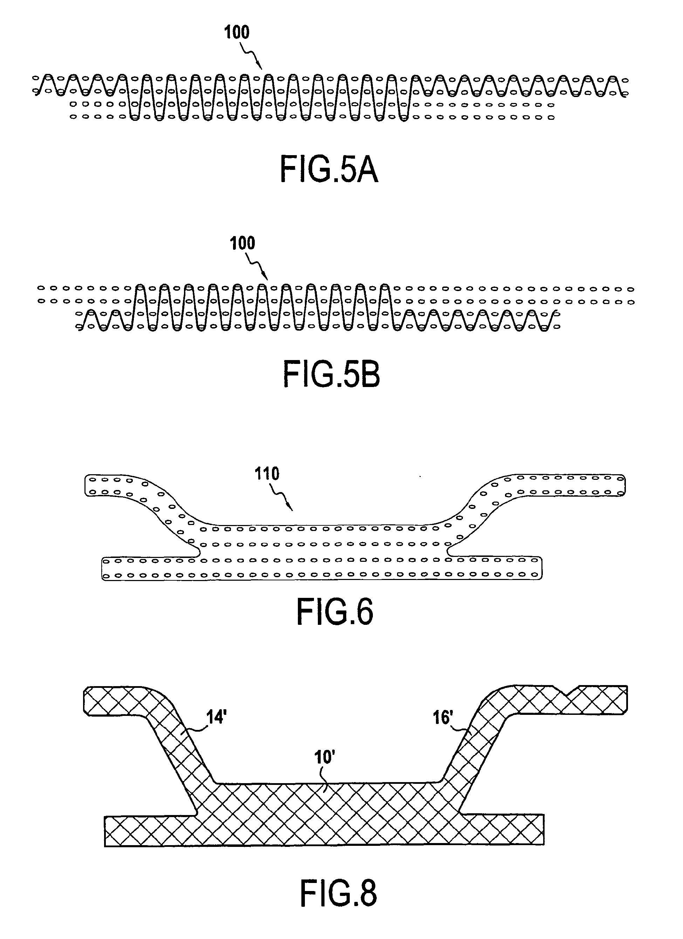

Les figures 5A et 5B montrent en coupe chaîne des exemples de plans d'armure successifs pour le tissage d'une ébauche 100 permettant d'obtenir une préforme de secteur d'anneau.

Dans l'exemple illustré, le nombre total de couches de fils de chaîne est égal à 4. Il pourra bien entendu être différent de 4, notamment supérieur. Dans un premier plan (figure 5A), les couches de fils de chaîne sont toutes liées entre elles par fil de trame dans la partie centrale de l'ébauche correspondant à la partie centrale de l'anneau entre ses extrémités amont et aval tandis que de chaque côté de la partie centrale seules les deux couches supérieures de fils de chaîne sont liées entre elles. Dans le plan suivant (figure 5B), les couches de fils de chaîne sont toujours toutes liées entre elles par fil de trame dans la partie centrale de l'ébauche tandis que de chaque côté de la partie centrale seules les deux couches inférieures de fils de chaîne sont liées entre elles.

On notera que le nombre de fils de chaîne dans les couches supérieures de fils de chaîne est plus élevé que dans les couches inférieures pour ménager des longueurs suffisantes pour les pattes d'accrochage.

Le tissage peut être de type interlock, comme illustré. D'autres armures de tissage tridimensionnel ou multicouches peuvent être utilisées comme par exemple des armures multi-toile ou multi-satin. On pourra se référer au document WO 2006/136755.

Après tissage, l'ébauche 100 peut être mise en forme pour obtenir une préforme 110 de secteur d'anneau sans coupe de fils comme montré très schématiquement sur la figure 6 où l'on a représenté uniquement les fils de chaîne et l'enveloppe de la préforme 110.

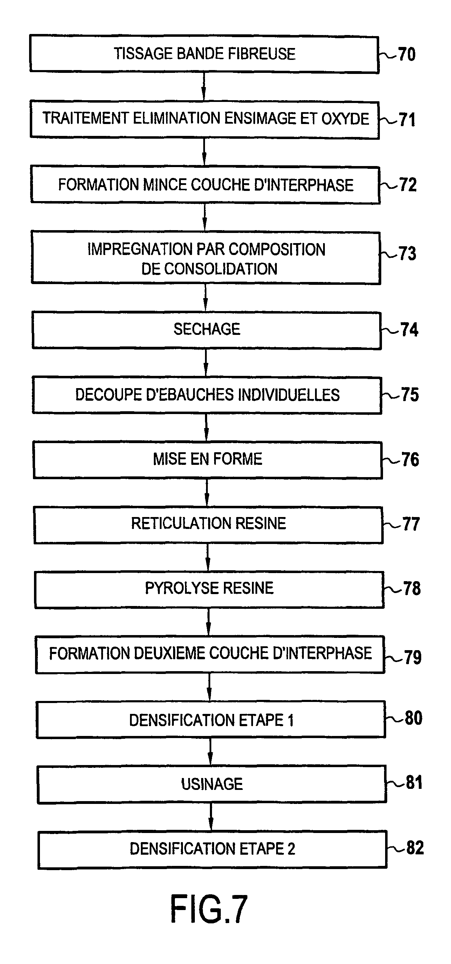

La figure 7 indique des étapes successives d'un mode de réalisation d'un secteur d'anneau en CMC, dans le cas par exemple d'une préforme fibreuse en fibres SiC.

A l'étape 70, une bande fibreuse continue est tissée avec des fils en fibres SiC avec sa direction longitudinale en sens chaîne, de la façon représentée par les figures 5A et 5B.

A l'étape 71, la bande fibreuse est traitée pour éliminer l'ensimage présent sur les fibres et la présence d'oxyde à la surface des fibres. L'élimination de l'oxyde est obtenue par traitement acide, notamment par immersion dans un bain d'acide fluorhydrique. Si l'ensimage n'est pas éliminable par le traitement acide, un traitement préalable d'élimination de l'ensimage est réalisé, par exemple par décomposition de l'ensimage par bref traitement thermique.

A l'étape 72, une couche mince de revêtement d'interphase est formée sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC avec par exemple de 5%at à 20%at de B, le complément étant C). La couche mince de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 73, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine (étape 74), des ébauches fibreuses individuelles 100 sont découpées (étape 75).

A l'étape 76, une ébauche fibreuse ainsi découpée est mise en forme et placée dans un moule, ou conformateur, par exemple en graphite pour conformation afin d'obtenir une préforme 110 ayant une forme voisine de celle d'un secteur d'anneau 10 à fabriquer.

Ensuite, la résine est réticulée (étape 77) et la résine réticulée est pyrolysée (étape 78). La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Une deuxième couche d'interphase peut être formée par CVI (étape 79) si nécessaire pour obtenir globalement une interphase fibres-matrice ayant une épaisseur suffisante pour assurer une fonction de défragilisation du matériau composite. La deuxième couche d'interphase peut être en matériau choisi parmi PyC, BN, BC, pas nécessairement le même que celui de la première couche d'interphase. Comme cela est connu, de tels matériaux d'interphase sont capables d'assurer une relaxation de contraintes au fond de fissures qui parviennent à l'interphase à travers la matrice du matériau composite et ainsi éviter ou retarder une propagation des fissures à travers les fibres avec rupture de celles-ci, rendant le matériau composite moins fragile. L'épaisseur de la deuxième couche d'interphase est de préférence au moins égale à 100 nanomètres.

La réalisation d'une interphase en deux couches, comme indiquée ci-avant est préférée. La première couche d'interphase contribue à éviter une adhérence trop forte du résidu de pyrolyse de la résine de consolidation sur les fibres.

Une densification par une matrice céramique de la préforme consolidée est ensuite réalisée. On peut réaliser cette densification par CVI auquel cas la formation de la deuxième couche d'interphase et la densification par la matrice céramique peuvent être enchaînées dans un même four.

La densification par CVI d'une préforme par une matrice céramique, notamment une matrice SiC, est bien connue. Une phase gazeuse réactionnelle contenant du méthyltrichlorosilane (MTS) et du gaz hydrogène (H₂) peut être utilisée. La préforme consolidée est placée dans l'enceinte, sans l'aide d'outillage de maintien de sa forme et la phase gazeuse est introduite dans l'enceinte. Dans des conditions contrôlées notamment de température et de pression, la phase gazeuse diffuse dans la porosité de la préforme pour former le dépôt de matrice SiC par réaction entre ses constituants.

La densification par CVI de la préforme consolidée peut être réalisée par une matrice autre que SiC, notamment une matrice auto-cicatrisante, des exemples de phases de matrice auto-cicatrisantes étant un système ternaire Si-B-C ou du carbure de bore B₄C. On pourra se référer aux documents US 5 246 736 et US 5 965 266 qui décrivent l'obtention par CVI de telles matrices auto-cicatrisantes.

La densification peut être réalisée en deux étapes successives (étapes 80 et 82) séparées par une étape 81 d'usinage aux dimensions désirées de la pièce à fabriquer. La deuxième étape de densification permet non seulement de compléter la densification à coeur du matériau composite mais aussi de former un revêtement de surface sur les fibres éventuellement mises à nu pendant l'usinage.

On notera qu'un pré-usinage, ou détourage peut être réalisé entre les étapes 77 et 78, c'est-à-dire après réticulation et avant pyrolyse de la résine.

Après densification, la couche de revêtement abradable peut être formée, par exemple par dépôt physique en phase gazeuse, comme connu en soi.

En référence à la figure 7, l'utilisation de fils en fibres SiC pour former le renfort fibreux du matériau composite a été mentionnée. On pourra bien entendu utiliser des fibres en une autre céramique ou des fibres de carbone. Dans ce dernier cas, l'étape 71 est omise.

Dans ce qui précède, on a envisagé la réalisation de secteurs d'anneau avec pattes d'accrochage présentant en section méridienne une forme en S.

En variante, on pourra conférer aux pattes d'accrochage une forme en L en section méridienne, comme les pattes 14', 16' du secteur d'anneau 10' montré par la figure 8.

## Revendications

1. Ensemble d'anneau de turbine comprenant une pluralité de secteurs d'anneau (10) en une seule pièce en matériau composite à matrice céramique et une structure de support d'anneau, chaque secteur d'anneau étant à section sensiblement en forme de π et ayant une première partie (12) formant base annulaire avec une face interne définissant la face interne de l'anneau de turbine et une face externe à partir de laquelle s'étendent deux parties formant pattes (14, 16) dont les extrémités sont engagées dans des logements de la structure de support d'anneau,
**caractérisé en ce que** les extrémités (14a, 16a) des pattes (14, 16) des secteurs d'anneau sont maintenues sans jeu radial par la structure de support d'anneau.

2. Ensemble d'anneau de turbine selon la revendication 1, **caractérisé en ce que** les pattes (14, 16) ont, en section méridienne, une longueur libre au moins égale à 3 fois leur largeur moyenne.

3. Ensemble d'anneau de turbine selon l'une quelconque des revendications 1 et 2, **caractérisé en ce que** les pattes (14, 16) ont en section méridienne une forme sensiblement en S.

4. Ensemble d'anneau de turbine selon l'une quelconque des revendications 1 à 3, **caractérisé en ce que** l'une ou première (14) des pattes a son extrémité (14a) maintenue radialement par engagement dans un logement à section sensiblement en U d'une partie en une seule pièce en forme de crochet (34) de la structure de support d'anneau.

5. Ensemble d'anneau de turbine selon la revendication 4, **caractérisé en ce que** la première patte est la patte amont (14).

6. Ensemble d'anneau de turbine selon l'une quelconque des revendications 4 et 5, **caractérisé en ce que** le logement à section en U est délimité par des branches interne et externe opposées, et la branche interne (34a) a une longueur inférieure à celle de la branche externe.

7. Ensemble d'anneau de turbine selon l'une quelconque des revendications 1 à 6, **caractérisé en ce que** l'une ou seconde (16) des pattes a son extrémité (16a) maintenue radialement sans jeu contre une surface annulaire de la structure de support d'anneau au moyen d'une pince rapportée (38).

8. Ensemble d'anneau de turbine selon la revendication 7, **caractérisé en ce que** la seconde patte est la patte aval (16).

9. Ensemble d'anneau de turbine selon l'une quelconque des revendications 1 à 8, **caractérisé en ce que** chaque secteur d'anneau (10) est immobilisé axialement par engagement mutuel de reliefs sensiblement complémentaires (17, 37) formés sur des surfaces d'appui en regard d'une patte (16) et d'une partie (36) de la structure de support d'anneau.

10. Ensemble d'anneau de turbine selon la revendication 9, **caractérisé en ce qu'**un joint d'étanchéité (20) est interposé entre les surfaces d'appui en regard.

11. Ensemble d'anneau de turbine selon l'une quelconque des revendications 9 et 10, **caractérisé en ce que** le relief de maintien axial sur la surface d'appui d'une patte d'accrochage (16) est sous forme d'une rainure (17) coopérant avec une nervure (37) formée sur la surface d'appui de la structure de support d'anneau.

12. Ensemble d'anneau de turbine selon la revendication 11, **caractérisé en ce que** la rainure (17) est à profil sensiblement en forme de V.

## Claims

1. A turbine ring assembly comprising a ring support structure and a plurality of ring sectors (10), each being formed of a single piece of ceramic matrix composite material, each ring sector presenting a section that is substantially π-shaped and having a first portion (12) forming an annular base with an inside face defining the inside face of the turbine ring and an outside face from which there extend two tab-forming portions (14, 16) having ends that are engaged in housings in the ring support structure, the assembly being **characterized in that** the ends (14a, 16a) of the tabs (14, 16) are held without radial clearance by the ring support structure.

2. A turbine ring assembly according to claim 1, **characterized in that** the tabs (14, 16) have a free length in meridian section that is not less than three times their mean width.

3. A turbine ring assembly according to claim 1 or claim 2, **characterized in that** the tabs (14, 16) are substantially S-shaped in meridian section.

4. A turbine ring assembly according to any one of claims 1 to 3, **characterized in that** one, or a first one, of the tabs (14) has its end (14a) held radially by engaging in a housing of substantially U-shaped section in a one-piece hook-shaped portion (34) of the ring support structure.

5. A turbine ring assembly according to claim 4, **characterized in that** the first tab is the upstream tab (14).

6. A turbine ring assembly according to claim 4 or claim 5, **characterized in that** the housing of U-shaped section is defined by opposite inner and outer branches, and the inner branch (34a) has a length that is shorter than the length of the outer branch.

7. A turbine ring assembly according to any one of claims 1 to 6, **characterized in that** one, or a second one, of the tabs (16) has its end (16a) held radially without clearance against an annular surface of the ring support structure by means of a fitted clip (38).

8. A turbine ring assembly according to claim 7, **characterized in that** the second tab is the downstream tab (16).

9. A turbine ring assembly according to any one of claims 1 to 8, **characterized in that** each ring sector (10) is held axially by mutual engagement of substantially complementary axial holding portions in relief (17, 37) formed on facing bearing surfaces of a tab (16) and of a portion (36) of the ring support structure.

10. A turbine ring assembly according to claim 9, **characterized in that** a sealing gasket (20) is interposed between the facing bearing surfaces.

11. A turbine ring assembly according to claim 9 or claim 10, **characterized in that** the axial holding portion in relief on the bearing surface of an attachment tab (16) is in the form of a groove (17) co-operating with a rib (37) formed on the bearing surface of the ring support structure.

12. A turbine ring assembly according to claim 11, **characterized in that** the groove (17) has a profile that is substantially V-shaped.

## Patentansprüche

1. Turbinenringanordnung, umfassend eine Vielzahl von einstückigen Ringsektoren (10) aus Keramikmatrix-Verbundwerkstoff sowie eine Ringtragstruktur, wobei jeder Ringsektor einen im wesentlichen π-förmigen Querschnitt aufweist und ein eine ringförmige Basis bildendes erstes Teil (12) mit einer die Innenseite des Turbinenrings definierenden Innenseite und einer Außenseite aufweist, von der aus sich zwei Laschen bildende Teile (14, 16) erstrecken, deren Enden in Aufnahmen der Ringtragstruktur eingesteckt sind,
**dadurch gekennzeichnet, daß** die Enden (14a, 16a) der Laschen (14, 16) der Ringsektoren durch die Ringtragstruktur radialspielfrei gehalten sind.

2. Turbinenringanordnung nach Anspruch 1, **dadurch gekennzeichnet, daß** die Laschen (14, 16) im Meridianquerschnitt eine freie Länge aufweisen, die wenigstens gleich dem Dreifachen ihrer mittleren Breite ist.

3. Turbinenringanordnung nach einem der Ansprüche 1 und 2, **dadurch gekennzeichnet, daß** die Laschen (14, 16) im Meridianquerschnitt im wesentlichen eine S-Form aufweisen.

4. Turbinenringanordnung nach einem der Ansprüche 1 bis 3, **dadurch gekennzeichnet, daß** das Ende (14a) der einen oder ersten (14) der Laschen durch Eingreifen in eine Aufnahme mit im wesentlichen U-förmigen Querschnitt eines einstückigen, hakenförmigen Teils (34) der Ringtragstruktur radial gehalten ist.

5. Turbinenringanordnung nach Anspruch 4, **dadurch gekennzeichnet, daß** die erste Lasche die stromaufwärtige Lasche (14) ist.

6. Turbinenringanordnung nach einem der Ansprüche 4 und 5, **dadurch gekennzeichnet, daß** die Aufnahme mit U-förmigem Querschnitt durch gegenüberüberliegende Innen- und Außenschenkel begrenzt ist und der Innenschenkel (34a) eine geringere Länge als der Außenschenkel aufweist.

7. Turbinenringanordnung nach einem der Ansprüche 1 bis 6, **dadurch gekennzeichnet, daß** das Ende (16a) der einen oder zweiten (16) der Laschen an einer ringförmigen Fläche der Ringtragstruktur mittels einer angesetzten Klemme (38) radial spielfrei gehalten ist.

8. Turbinenringanordnung nach Anspruch 7, **dadurch gekennzeichnet, daß** die zweite Lasche die stromabwärtige Lasche (16) ist.

9. Turbinenringanordnung nach einem der Ansprüche 1 bis 8, **dadurch gekennzeichnet, daß** jeder Ringsektor (10) durch gegenseitiges Eingreifen von im wesentlichen ergänzenden Reliefs (17, 37), die an einander gegenüberliegenden Anlageflächen einer Lasche (16) und eines Teils (36) der Ringtragstruktur ausgebildet sind, axial festgelegt ist.

10. Turbinenringanordnung nach Anspruch 9, **dadurch gekennzeichnet, daß** eine Dichtung (20) zwischen den einander gegenüberliegenden Anlageflächen eingesetzt ist.

11. Turbinenringanordnung nach einem der Ansprüche 9 und 10, **dadurch gekennzeichnet, daß** das Axialhalterelief an der Anlagefläche einer Einhaklasche (16) in Form einer Nut (17) vorliegt, die mit einer an der Anlagefläche der Ringtragstruktur ausgebildeten Rippe (37) zusammenwirkt.

12. Turbinenringanordnung nach Anspruch 11, **dadurch gekennzeichnet, daß** die Nut (17) ein im wesentlichen V-förmiges Profil aufweist.
